# EUROPÄISCHE PATENTANMELDUNG

(11) **EP 1 411 381 A1**
(43) Veröffentlichungstag der Anmeldung: **21.04.2004**
(21) Anmeldenummer: 03018977.3
(22) Anmeldetag: 21.08.2003
(51) Int. Cl.: G02B 27/34, G01S 3/787, G02B 23/00, G02B 27/32, F41G 1/00, F41G 1/38, B23K 26/00

(54) **Verfahren zum Anbringen einer Struktur in Form eines Fadenkreuzes in einem Fernrohr**

(30) Priorität: 17.10.2002 DE 10248524
(71) Anmelder: Hensoldt AG, 35576 Wetzlar (DE)
(72) Erfinder: Mueller, Norbert, 35614 Asslar (DE)
(74) Vertreter: Lorenz, Werner, Dr.-Ing.

(57) **Zusammenfassung**

Die Erfindung betrifft ein Verfahren zum Anbringen einer Struktur (2d) in Form eines Fadenkreuzes und/oder von Strichmarken in einem Zielfernrohr oder Doppelfernrohr, wobei wenigstens ein transparentes Optikteil (1d), insbesondere eine Linse des Ziel- oder Doppelfernrohres mit der Struktur (2d) versehen ist. Die Struktur (2d) wird als Innengravur in das transparente Optikteil (1d) durch Laserwirkung eingebracht.

## Beschreibung

Die Erfindung betrifft ein Verfahren zum Anbringen einer Struktur in Form eines Fadenkreuzes und/oder von Strichmarken in einem Zielfernrohr oder Doppelfernrohr, wobei wenigstens ein transparentes Optikteil, insbesondere eine Linse des Zieloder Doppelfernrohres mit der Struktur versehen ist. Die Erfindung betrifft außerdem ein Zielfernrohr oder Doppelfernrohr mit transparenten Optikteilen, wobei wenigstens ein transparentes Optikteil, insbesondere eine Linse, mit einer Struktur in Form eines Fadenkreuzes und/oder von Strichmarken versehen ist.

Um in Zielfernrohren oder Doppelfernrohren Strichmarken bzw. Fadenkreuze einzubringen, verwendet man bisher Glas, auf das eine galvanische Schicht aufgebracht wird. Problematisch ist dabei die Vermeidung von Verunreinigungen, welche ein komplettes Auftragen der galvanischen Schicht verhindern können. Dieses Glas wird anschließend in das Fernrohr eingebracht. Des weiteren besteht die Möglichkeit, fadenkreuzähnliche Strukturen durch Ätzen in das Glas einzubringen.

Eine Montage der Fadenkreuze/Strichmarken in die Fernrohre gestaltet sich schwierig und aufwendig, da sehr genau und vorsichtig gearbeitet werden muss. Verunreinigungen sind auch hier selbstverständlich zu vermeiden.

Der vorliegenden Erfindung liegt daher die Aufgabe zugrunde, ein Verfahren und ein Zielfernrohr oder Doppelfernrohr der eingangs erwähnten Art zu schaffen, die die Nachteile des Standes der Technik lösen, insbesondere soll beim Einbringen des Fadenkreuzes/der Strichmarke eine hohe Genauigkeit erreicht und eine einfache Montage ermöglicht werden.

Diese Aufgabe wird erfindungsgemäß dadurch gelöst, dass die Struktur als Innengravur in das transparente Optikteil durch Lasereinwirkung eingebracht wird.

Die Aufgabe wird bezüglich des Zielfernrohrs oder Doppelfernrohrs durch den kennzeichnenden Teil von Anspruch 3 gelöst.

Durch diese Maßnahmen ist eine einfache, saubere und genaue Montage des Zielfernrohrs möglich. Auf ein Ätzen oder Auftragen einer galvanischen Schicht auf das Optikteil kann verzichtet werden, wodurch in einfacher und vorteilhafter Weise Fehler infolge von Verunreinigungen von vorn herein vermieden werden.

Erfindungsgemäß kann ferner vorgesehen sein, dass die Struktur an die Bildfeldwölbung des Zielfernrohrs oder Doppelfernrohrs angepasst wird.

Dadurch kann die Struktur leicht von vorn herein an die erforderliche Bildfeldwölbung des jeweiligen Zielfernrohrs oder Doppelfernrohrs angeglichen werden, ohne das transparente Optikteil, welches die Struktur trägt selbst anpassen zu müssen.

Vorteilhafte Ausgestaltungen und Weiterbildungen der Erfindung ergeben sich aus den nachfolgend anhand der Zeichnung prinzipmäßig beschriebenen Ausführungsbeispielen.

Es zeigt:
- Figur 1a: ein transparentes Optikteil gemäß dem Stand der Technik, in das eine Struktur durch Ätzen eingebracht ist;
- Figur 1b: ein transparentes Optikteil gemäß dem Stand der Technik, in das eine Struktur durch Aufbringen einer galvanischen Schicht eingebracht ist;
- Figur 2: ein transparentes Optikteil, bei dem eine Struktur durch das erfindungsgemäße Verfahren eingebracht wurde; und
- Figur 3: ein transparentes Optikteil, bei dem eine Struktur durch das erfindungsgemäße Verfahren eingebracht und an eine Bildfeldwölbung angepasst wurde.

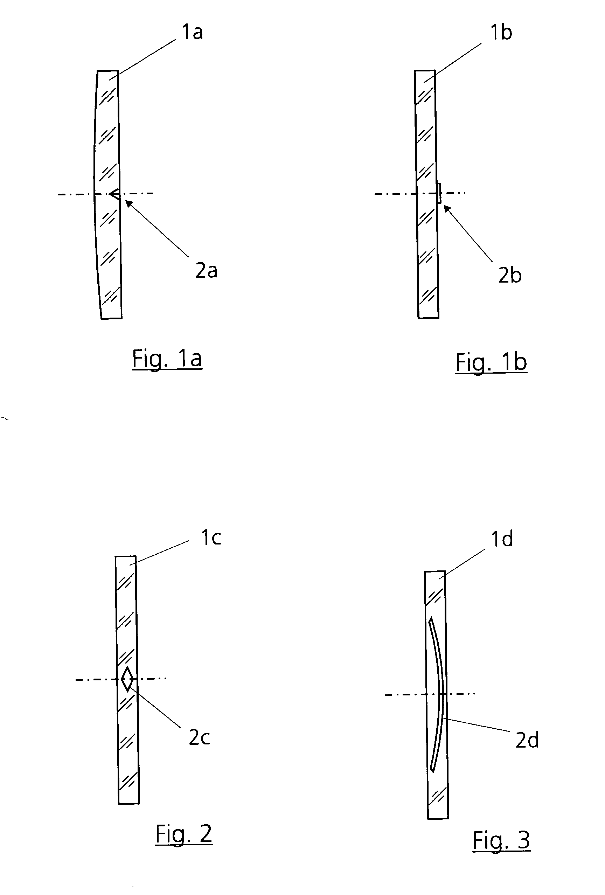

Wie aus Figur 1a ersichtlich, weist beim Stand der Technik ein Glas 1a eine geätzte Strichmarke- bzw. Fadenkreuzstruktur 2a auf. Das Glas wird in ein nicht dargestelltes Zielfernrohr oder Doppelfernrohr eingebracht, um eine Strichmarke bzw. ein Fadenkreuz im Strahlengang für den Betrachter zu erzeugen. Die optische Achse ist dabei prinzipmäßig als Strich-Punkt-Linie angedeutet. Sehr nachteilig ist dabei, dass beim herkömmlichen Ätzprozess oftmals Verunreinigungen auftreten, die die Qualität des Fadenkreuzes verschlechtern. In Figur 1b wurde als weiterer Stand der Technik eine Strichmarke- bzw. Fadenkreuzstruktur auf das Glas 1b als galvanische Schicht 2b aufgebracht. Die Montage des Glases 1b in das Zielfernrohr gestaltet sich sehr schwierig, da Verunreinigungen durch den Galvanisierungsprozess vermieden werden müssen. Gleichzeitig muss darauf geachtet werden, dass sich keine Teile der galvanischen Schicht bei der Montage lösen.

Wie aus Figur 2, die die Erfindung betrifft, ersichtlich, ist eine Strichmarken- bzw. Fadenkreuzstruktur 2c in ein Glas 1c als Innengravur durch Lasereinwirkung eingebracht.

Die Wirkungsweise und Funktion der eingesetzten Lasergravurtechnologie ist allgemein bekannt, weshalb im folgenden nicht detailliert darauf eingegangen wird. Beispielsweise kommt es bei der Fokussierung eines Laserstrahls genügend hoher Leistungsdichte in das Innere eines transparenten Festkörpers aufgrund nichtlinearer optischer Effekte zu einer lokalisierten Absorption im Laserfokus. Der konzentrierte Energieeintrag hat dabei eine lokal eng begrenzte Rissbildung zur Folge. Derartige Mikrorisse erscheinen wegen ihres Streuverhaltens als helle Punkte. Durch geeignete 2D- oder 3D-Relativbewegung von Werkstück und Laserstrahl sowie durch eine Synchronisation zwischen dem Bewegungsablauf und den Laserpulsen lassen sich im Werkstück gewünschte Strukturen punktweise zusammensetzen.

Durch die Laserinnengravur werden in einfacher und vorteilhafter Weise Verunreinigungen von vorne herein vermieden. Des weiteren kann die Struktur 2c bei der Montage in das Fernrohr nicht verletzt werden.

In Figur 3 wurde eine Fadenkreuzstruktur 2d in ein Glas 1d durch Laserinnengravur eingebracht, wobei die Struktur 2d gleichzeitig an die im Zielfernrohr nötige Bildfeldwölbung angepasst wurde.

## Patentansprüche

1. Verfahren zum Anbringen einer Struktur in Form eines Fadenkreuzes und/oder von Strichmarken in einem Zielfernrohr oder Doppelfernrohr, wobei wenigstens ein transparentes Optikteil, insbesondere eine Linse des Zieloder Doppelfernrohrs mit der Struktur versehen ist, **dadurch gekennzeichnet, dass** die Struktur als Innengravur (2c,2d) in das transparente Optikteil (1c,1d) durch Lasereinwirkung eingebracht wird.

2. Verfahren nach Anspruch 1, **dadurch gekennzeichnet, dass** die Struktur (1d) an die Bildfeldwölbung des Zielfernrohrs oder Doppelfernrohrs angepasst wird.

3. Zielfernrohr oder Doppelfernrohr mit transparenten Optikteilen, wobei wenigstens ein transparentes Optikteil, insbesondere eine Linse, mit einer Struktur in Form eines Fadenkreuzes und/oder von Strichmarken versehen ist, **dadurch gekennzeichnet, dass** die Struktur als Innengravur (2c,2d) in das transparente Optikteil (1c,1d) eingebracht ist.
